# DEMANDE DE BREVET EUROPEEN

(11) **EP 3 178 875 A1**
(43) Date de publication de la demande: **14.06.2017**
(21) Numéro de dépôt: 15199632.9
(22) Date de dépôt: 11.12.2015
(51) Int. Cl.: C08K 7/02, C08K 3/00, C08K 3/22, C08K 3/38, C08K 5/00, C08L 21/00, A44C 27/00, G04B 37/18, G04B 37/22

(54) **MATIÈRE ÉLASTOMÈRE CONFORTABLE**

(71) Demandeur: The Swatch Group Research and Development Ltd., 2074 Marin (CH)
(72) Inventeur: François, Nicolas, 2000 Neuchâtel (CH)
(74) Mandataire: Giraud, Eric

(57) **Abrégé**

L'invention se rapporte à une matière élastomère pour bracelet ou composants d'horlogerie destinés à être en contact avec la peau, la matière élastomère comprenant des moyens d'évacuation de l'humidité. Selon l'invention, les moyens d'évacuation comprennent des microfibres hydrophiles aptes à évacuer et neutraliser l'humidité au travers de la matière.

## Description

### Domaine de l'invention

La présente invention concerne le domaine technique des matériaux à base d'élastomères. Plus précisément, l'invention concerne une matière élastomère pour la réalisation de pièces d'horlogerie, ainsi qu'un procédé de fabrication de pièces, ainsi que les pièces obtenues.

### Arrière-plan de l'invention

De nombreux matériaux élastomères existent sur le marché et sont connus pour leur utilisation en tant que bracelet par exemple pour leur qualité de confort, de touché souple et leur résistance.

Ainsi, il est connu du document JP 2000204265 de réaliser une matière élastomère thermoplastique comportant des propriétés antibactériennes et présentant une bonne résistance au vieillissement.

Cependant, les matières élastomères utilisées pour les bracelets ou les composants d'horlogerie en contact avec la peau ne permettent pas d'obtenir une bonne évacuation de la transpiration, les propriétés antibactériennes permettant seulement de neutraliser les mauvaises odeurs. De plus, les bracelets sont souvent soumis à des frottements ou de l'abrasion ce qui tend à enlever une certaine quantité de l'agent antibactérien et donc à diminuer l'efficacité de ce dernier.

### Résumé de l'invention

L'invention a notamment pour objectif de pallier aux différents inconvénients de ces techniques connues.

Plus précisément, un objectif de l'invention est de fournir un matériau adapté à la réalisation de pièces en matière élastomère destinées à être en contact prolongé avec la peau (direct ou indirect), et obtenir un élastomère avec des propriétés permettant d'améliorer le confort, tout en conservant une bonne colorabilité et une bonne résistance au vieillissement (UV, transpiration, esthétique).

Ces objectifs, ainsi que d'autres qui apparaîtront plus clairement par la suite, sont atteints selon l'invention à l'aide d'une matière élastomère pour bracelets ou composants d'horlogerie destinés à être en contact avec la peau, la matière élastomère comprenant des moyens d'évacuation de l'humidité, caractérisée en ce que les moyens d'évacuation comprennent des microfibres hydrophiles aptes à évacuer et neutraliser l'humidité au travers de la matière.

Conformément à d'autres variantes avantageuses de l'invention :
- la matière élastomère comprend des charges conductrices thermiquement choisies parmi l'oxyde de zinc ou le nitrure de bore ;
- la matière élastomère comprend un additif antimicrobien de type composé organique de zinc ou sels d'argent ou sels d'aluminium;
- la matière est choisie parmi le polyuréthane, le polyéther block amide, les copolyesters élastomères, les élastomères acryliques ou les élastomères styréniques ;
- la matière est choisie parmi des élastomères vulcanisables à chaud tels que les fluoroélastomères, les copolymères butadiène acrylonitrile, les silicones, ou l'éthylène propylène diène monomère ;
- la matière est choisie parmi des élastomères vulcanisables à froid tels que les silicones ;
- les microfibres hydrophiles présentent une finesse inférieure à 150 mTex ;
- les microfibres hydrophiles sont réalisées en une matière synthétique de la famille des polyamides, ou des polyesters ;
- les microfibres hydrophiles sont réalisées en une matière cellulosique comme le coton ou le lin ou bien des dérivés artificiels comme la viscose ;
- les microfibres hydrophiles présentent une section transversale à n canaux, avec n >2 ;
- la section des microfibres hydrophiles présente une forme oblongue avec des rainures ou une forme d'hélice.

L'invention concerne aussi et notamment toute pièce d'horlogerie réalisée en matière élastomère conformément à l'invention.

L'invention concerne également un procédé de fabrication d'un bracelet comprenant au moins une partie à base d'une matière élastomère, la matière élastomère comprenant au moins des microfibres hydrophiles, des charges conductrices thermiquement et un additif antimicrobien.

Le procédé de fabrication comprend les étapes suivantes :
- réaliser un mélange à partir de la matière élastomère ;
- ajouter au mélange obtenu à la première étape au moins des microfibres hydrophiles, des charges conductrices thermiquement et un additif antimicrobien ;
- réaliser le bracelet à partir du mélange obtenu à la deuxième étape au moyen d'un moulage.

Selon ce procédé, la matière élastomère est choisie parmi les élastomères thermoplastiques et les élastomères vulcanisables à chaud ou à froid.

L'invention concerne encore un procédé d'assemblage d'un bracelet obtenu au moyen du précédé de fabrication conforme à l'invention, comprenant les étapes suivantes :
- réaliser un une première couche d'un bracelet destinée à être en contact contre la peau ;
- assembler une couche esthétique sur le dessus de la première couche, la couche esthétique pouvant être du cuir, du tissu, du polymère ou tout autre élément décoratif.

### Description sommaire des dessins

D'autres caractéristiques et avantages de l'invention apparaîtront plus clairement à la lecture de la description suivante d'un mode de réalisation particulier de l'invention, donné à titre de simple exemple illustratif et non limitatif, et des figures annexées, parmi lesquelles :

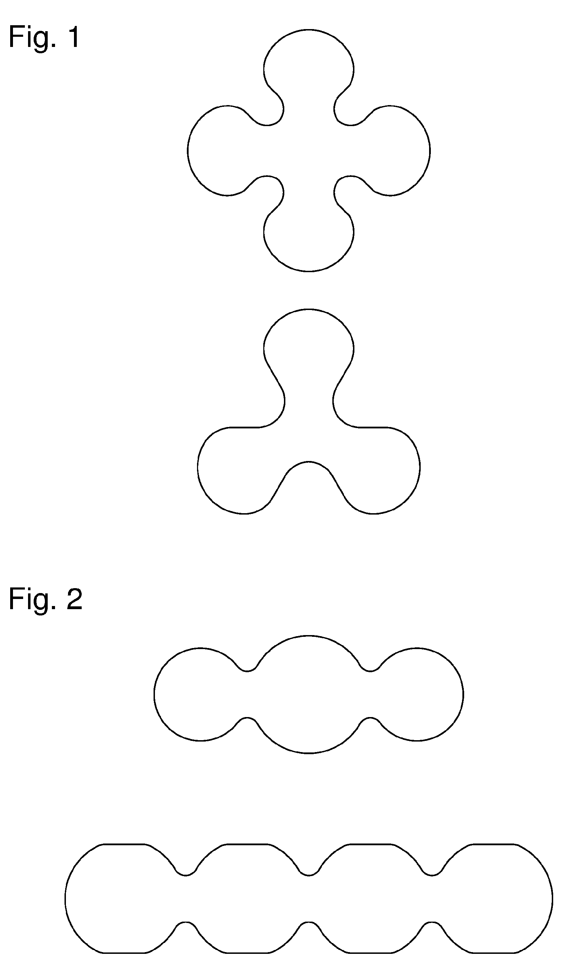

- les figures 1 et 2 illustrent une vue en coupe de fibres hydrophiles présentes dans la matière élastomère conforme à l'invention.

### Description détaillée des modes de réalisation préférés

L'invention concerne une matière élastomère pour bracelet ou composants d'horlogerie destinés à être en contact avec la peau, la matière élastomère comprenant des moyens d'évacuation de l'humidité, caractérisé en ce que les moyens d'évacuation comprennent des microfibres hydrophiles aptes à évacuer et neutraliser l'humidité au travers de la matière.

Selon un mode de réalisation préférentiel de l'invention, la matière élastomère comprend des charges conductrices thermiquement présentant une conductivité thermique supérieure à 20W.m-1.K-1, telles qu'un oxyde de zinc ou encore une nitrure de bore hexagonal. Ces charges conductrices thermiquement peuvent être présentes à hauteur de 40% en masse et permettent d'accroître la conductivité thermique de la matière jusqu'à 12W.m-1.K-1 sans pour autant accroitre la conductivité électrique de celle-ci. De telles charges conductrices thermiquement ont pour avantage de mieux évacuer la chaleur corporelle et donc de limiter la transpiration.

Selon un aspect avantageux de l'invention, la matière élastomère peut comprendre un additif antimicrobien de type composé organique de zinc ou sels d'argent ou d'aluminium de manière à limiter, voire d'empêcher, le développement de mauvaises odeurs, à la surface et à l'intérieur de la matière, dues essentiellement à la transpiration du porteur lorsque le bracelet est au contact de la peau par exemple.

Selon les besoins, l'agent antibactérien peut être combiné au mélange d'élastomère et de charges conductrices à hauteur de 2% à 6% en masse.

La matière élastomère pour le bracelet ou les composants d'horlogerie peut être choisie parmi un ou plusieurs élastomères thermoplastiques tels que le polyuréthane, le polyéther block amide, les copolyesters élastomères, les élastomères acryliques ou les élastomères styréniques.

Selon un autre mode de réalisation de l'invention, la matière est choisie parmi des élastomères vulcanisables à chaud tels que les fluoroélastomères, les copolymères butadiène acrylonitrile, les silicones, ou l'éthylène propylène diène monomère.

Encore selon un autre mode de réalisation de l'invention, la matière est choisie parmi des élastomères vulcanisables à froid tels que les silicones.

La dureté de la matière élastomère peut être choisie sur une gamme de 20 shore 00 à 90 shore D suivant le besoin haptique et fonctionnel.

Il est possible de réaliser par moulage des éléments durs d'une boîte avec des duretés de 90 shore D par exemple, alors que les matières shore 00 et shore A seront plutôt utilisées en revêtement sur un élément dur. Les pièces souples telles que les bracelets seront réalisées à partir d'une dureté shore A.

Par exemple, dans le cas d'une boîte de montre, l'élastomère peut être pulvérisé à la surface de la boite et servir de revêtement, ou bien surmoulé pour apporter un toucher doux.

Selon l'invention, le mélange d'élastomère, de charges conductrices et d'agent antibactérien est repris et mélangé à des microfibres hydrophiles prétraitées pour une meilleure affinité avec le mélange. Selon les besoins, les microfibres hydrophiles sont présentes entre 8% et 25% en masse de manière à atteindre le seuil de percolation.

Pour rappel, il y a percolation lorsque l'agent qui se déplace dans les porosités de la structure est capable de traverser cette dernière de part en part. Dans le cas présent, la structure est représentée par la matière élastomère, les porosités sont représentées par les microfibres hydrophiles, et l'agent se déplaçant au travers de la matière est la transpiration.

Au seuil de percolation dans le mélange, les microfibres se touchent et forment des canaux améliorant jusqu'à mille fois le pouvoir de diffusion de la matrice formée par la matière élastomère et l'humidité peut être transportée par capillarité à travers la matière et ainsi être évacuée.

Conformément à la présente invention, les microfibres hydrophiles présentent une finesse inférieure à 150 mTex, ce qui est une taille suffisante pour pouvoir transporter les molécules type H₂O.

De manière avantageuse, les microfibres hydrophiles peuvent être réalisées en une matière synthétique de la famille des polyamides ou des polyesters car elles transportent rapidement l'humidité grâce à leurs fonctions hydrophiles et sèchent également très rapidement.

Selon un autre mode de réalisation de l'invention, les fibres hydrophiles peuvent être réalisées en une matière cellulosique comme le coton ou le lin ou bien des dérivés artificiels comme la viscose qui conviennent également pour évacuer l'humidité.

Selon l'invention, les microfibres ont préférentiellement une section transversale en forme d'hélice pour leur donner une surface spécifique plus importante et donc un pouvoir de diffusion plus rapide.

Plus précisément, et comme illustré aux figures 1 et 2, la section des fibres hydrophiles est en forme d'hélice à n pales avec n strictement supérieur à deux, de manière à offrir une plus grande surface spécifique et ainsi favoriser l'évacuation de l'humidité.

L'invention concerne également au moins un brin de bracelet en matière élastomère conforme à l'invention.

Le mélange décrit précédemment peut être directement moulé pour réaliser des brins de bracelets mono-matière en élastomère confortable, ou encore surmoulé pour réaliser des brins de bracelets bi-matières confortables, chaque brin présentant une première partie inférieure en matière confortable en contact avec la peau, et une partie supérieure dans une autre matière avantageuse pour sa fonction. On peut également imaginer que chacune des parties présente une couleur différente dans un but purement esthétique.

L'invention concerne également un procédé de fabrication d'un bracelet comprenant au moins une partie à base d'une matière élastomère, la matière élastomère comprenant au moins des microfibres hydrophiles, des charges conductrices thermiquement et un additif antimicrobien.

Selon l'invention, le procédé de fabrication comprend les étapes suivantes :
- réaliser un mélange à partir de la matière élastomère ;
- ajouter au mélange obtenu à la première étape au moins des microfibres hydrophiles, des charges conductrices thermiquement et un additif antimicrobien ;
- réaliser le bracelet à partir du mélange obtenu à la deuxième étape au moyen d'un moulage.

Selon les besoins de l'homme du métier et des pièces à réaliser, la matière élastomère peut être choisie parmi les élastomères thermoplastiques, les élastomères vulcanisables à chaud ou à froid, voire un mélange de ces matières.

L'invention concerne aussi un procédé d'assemblage d'un bracelet obtenu au moyen du précédé de fabrication conforme à l'invention, et comprenant les étapes suivantes :
- réaliser un une première couche d'un bracelet en matière élastomère conforme à l'invention et destinée à être en contact contre la peau de manière à pouvoir évacuer la transpiration ;
- assembler une couche esthétique sur le dessus de la première couche, la couche esthétique pouvant être du cuir, du tissu, du polymère ou tout autre élément décoratif.

Une telle matière avantageuse pour améliorer le confort permet de fabriquer des pièces d'horlogerie ou des bijoux comme des bracelets, des boucles de bracelets, des colliers, des boîtes, des fonds de boîte, des poussoirs, des boucles ou encore des lunettes. On note également que la matière peut se révéler très intéressante pour la fabrication de montures de lunettes, et en particulier les branches, le pont et les plaquettes.

Bien entendu, la présente invention ne se limite pas à l'exemple illustré et est susceptible de diverses variantes et modifications qui apparaîtront à l'homme de l'art.

## Revendications

1. Matière élastomère pour bracelets ou composants d'horlogerie destinés à être en contact avec la peau, la matière élastomère comprenant des moyens d'évacuation de l'humidité, **caractérisée en ce que** les moyens d'évacuation comprennent des microfibres hydrophiles aptes à évacuer et neutraliser l'humidité au travers de la matière.

2. Matière élastomère selon la revendication 1 comprenant des charges conductrices thermiquement choisies parmi l'oxyde de zinc ou le nitrure de bore.

3. Matière élastomère selon les revendications 1 ou 2 comprenant un additif antimicrobien de type composé organique de zinc ou sels d'argent ou de sels d'aluminium.

4. Matière élastomère selon l'une quelconques des revendications 1 à 3, dans laquelle la matière est choisie parmi des élastomères thermoplastiques tels que le polyuréthane, le polyéther block amide, les copolyesters élastomères, les élastomères acryliques ou les élastomères styréniques.

5. Matière élastomère l'une quelconques des revendications 1 à 3, dans laquelle la matière est choisie parmi des élastomères vulcanisables à chaud tels que les fluoroélastomères, les copolymères butadiène acrylonitrile, les silicones, ou l'éthylène propylène diène monomère.

6. Matière élastomère l'une quelconques des revendications 1 à 3, dans laquelle la matière est choisie parmi des élastomères vulcanisables à froid tels que les silicones.

7. Matière élastomère selon l'une quelconques des revendications 1 à 6, dans laquelle les microfibres hydrophiles présentent une finesse inférieure à 150 mTex.

8. Matière élastomère selon l'une quelconque des revendications 1 à 7, dans laquelle les microfibres hydrophiles sont réalisées en une matière synthétique de la famille des polyamides ou des polyesters.

9. Matière élastomère selon l'une quelconque des revendications 1 à 7 dans laquelle les microfibres hydrophiles sont réalisées en une matière cellulosique comme le coton ou le lin ou bien à base de dérivés artificiels comme la viscose.

10. Matière élastomère selon l'une quelconque des revendications 1 à 9, dans laquelle les microfibres hydrophiles présentent une section transversale à n canaux, avec n >2.

11. Matière élastomère selon la revendication 10, dans laquelle la section des microfibres hydrophiles présente une forme oblongue avec des rainures ou une forme d'hélice.

12. Procédé de fabrication d'un bracelet selon l'une des revendications 1 à 11, comprenant au moins une partie à base d'une matière élastomère, la matière élastomère comprenant au moins des microfibres hydrophiles, des charges conductrices thermiquement et un additif antimicrobien, **caractérisé en ce qu'**il comprend les étapes suivantes :
- réaliser un mélange à partir de la matière élastomère ;
- ajouter au mélange obtenu à la première étape au moins des microfibres hydrophiles, des charges conductrices thermiquement et un additif antimicrobien ;
- réaliser le bracelet à partir du mélange obtenu à la deuxième étape au moyen d'un moulage.

13. Procédé selon la revendication 12, **caractérisé en ce que** la matière élastomère est choisie parmi les élastomères thermoplastiques et les élastomères vulcanisables.

14. Procédé d'assemblage d'un bracelet obtenu au moyen du précédé selon les revendications 12 et 13, **caractérisé en ce qu'**il comprend les étapes suivantes :
- réaliser un une première couche d'un bracelet destinée à être en contact contre la peau ;
- assembler une couche esthétique sur le dessus de la première couche.

15. Procédé d'assemblage selon la revendication 14, dans lequel la couche esthétique est du cuir, du tissu, du polymère ou tout autre élément décoratif.
